# EUROPÄISCHE PATENTSCHRIFT

(11) **EP 3 099 744 B1**
(45) Veröffentlichungstag und Bekanntmachung des Hinweises auf die Patenterteilung: **09.12.2020**
(21) Anmeldenummer: 15704239.1
(22) Anmeldetag: 02.02.2015
(51) Int. Cl.: C08L 67/02, C08L 67/04

(54) **POLYMERZUSAMMENSETZUNG ENTHALTEND PLLA UND PDLA**
POLYMER COMPOSITION CONTAINING PLLA AND PDLA
COMPOSITION POLYMÈRE CONTENANT DU PLLA ET DU PDLA

(30) Priorität: 31.01.2014 DE 102014001152
(43) Veröffentlichungstag der Anmeldung: 07.12.2016
(73) Patentinhaber: BIOTEC Biologische Naturverpackungen GmbH & Co. KG, 46446 Emmerich (DE)
(72) Erfinder: SCHMIDT, Harald, 46446 Emmerich (DE); HESS, Christoph, 46459 Rees (DE); FRIEDEK, Wolfgang, 47551 Bedburg-Hau (DE); BECKMANN, Ralph, 48431 Rheine (DE)
(74) Vertreter: Cohausz & Florack
(86) Internationale Anmeldenummer: PCT/EP2015/052029
(87) Internationale Veröffentlichungsnummer: WO 2015/114126

(56) Entgegenhaltungen:
- EP-A1- 1 983 030
- EP-A1- 2 025 703
- WO-A1-2013/131649
- WO-A2-2013/062412
- DATABASE WPI Week 200379 Thomson Scientific, London, GB; AN 2003-847383 XP002738206, & JP 2003 128900 A (MITSUBISHI PLASTICS IND LTD) 8. Mai 2003 (2003-05-08)

## Beschreibung

Die Erfindung betrifft eine Polymerzusammensetzung sowie ein Verfahren zu ihrer Herstellung. Ferner betrifft die Erfindung die Verwendung der Polymerzusammensetzung in einem Verfahren zur Herstellung von Folien, Formteilen oder Fasern aus der Polymerzusammensetzung sowie derartige Erzeugnisse, welche die erfindungsgemäße Polymerzusammensetzung enthalten.

Unter dem Gesichtspunkt der Schonung fossiler Ressourcen, der Abfallentsorgung und Minderung der CO₂-Emissionen ist es wünschenswert, die weit verbreiteten herkömmlichen Kunststoffe auf Basis von fossilen Rohstoffquellen durch Kunststoffe zu ersetzen, die zumindest teilweise oder vollständig aus nachwachsenden Rohstoffen gewonnen werden können. Polymere, die zumindest teilweise oder vollständig auf nachwachsenden Rohstoffen basieren, werden auch "biobasierte" Polymere genannt.

Biologisch abbaubare Kunststoffe sind nicht zwangsläufig auch gleichzeitig biobasiert. So gibt es einige Kunststoffe, aus fossilen, nicht nachwachsenden Ressourcen, die biologisch abbaubar sind. Die biologische Abbaubarkeit ist nicht an die Rohstoffbasis gebunden, sondern hängt allein von der chemischen Struktur des Werkstoffs und seinem Vermögen ab, sich durch biologische Aktivität in natürlich vorkommende Stoffwechselendprodukte umzuwandeln.

Mittlerweile sind einige Polymerzusammensetzungen verfügbar, die sowohl vollständig biologisch abbaubar als auch biobasiert sind. Eine solche thermoplastische Polymerzusammensetzung, die sich insbesondere zur Blasfolienextrusion, Flachfolienextrusion und zum Spritzgießen von vollständig biologisch abbaubaren Produkten eignet, ist unter dem Handelsnamen "BIOPLAST® 500" von der Firma BIOTEC GmbH & Co. KG in Emmerich (Deutschland) kommerziell erhältlich.

Um die Einsatzmöglichkeiten von vollständig biologisch abbaubaren, biobasierten Polymerzusammensetzungen zu erweitern, ist vor allem eine erhöhte Wärmeformbeständigkeit der aus den Kunststoffen erhältlichen Folien, Formteilen oder Fasern besonders wünschenswert.

Viele Lebensmittel werden bei Temperaturen von über 70°C abgefüllt. Als Beispiele seien hier Heißgetränke wie Kaffee oder Tee, aber auch Würzsaucen wie Ketchup genannt. Letztere werden durch das Heißabfüllen gleichzeitig auch pasteurisiert.

Bisher werden für die Aufnahme dieser heißen Lebensmittel zumeist Behälter aus Kunststoffen auf Basis von Polystyrol oder Polypropylen verwendet. Diese Kunststoffe verfügen zwar über eine ausreichend hohe Wärmeformbeständigkeit, sind jedoch weder biologisch abbaubar noch biobasiert. Andererseits besitzen die meisten der heute verfügbaren, biologisch abbaubaren, biobasierten Kunststoffe keine genügend hohe Wärmeformbeständigkeit, um für diese Zwecke verwendet werden zu können.

Ein häufig in biologisch abbaubaren, biobasierten Kunststoffen verwendetes Polymer ist Polymilchsäure (PLA). PLA ist ein Polymer, das aus Milchsäuremonomeren aufgebaut ist und abhängig von seiner Zusammensetzung amorph, semikristallin oder kristallin sein kann. Es gibt zwei unterschiedliche Milchsäuremonomere, die untereinander in einer stereoisomeren Beziehung stehen, das D-Milchsäure- und das L-Milchsäuremonomer. PLA enthält für gewöhnlich sowohl D- als auch L-Milchsäuremonomere und das Verhältnis dieser beiden Monomere in PLA beeinflusst entscheidend seine Eigenschaften. Aufgrund seiner Glasübergangstemperatur von ca. 55°C erweicht PLA bei Temperaturen oberhalb von 55°C rasch, was sich nachteilig auf seine Verwendung bei diesen Temperaturen für die Herstellung von Formteilen z.B. im Spritzgussverfahren auswirkt. Ebenso haben Zusammensetzungen auf PLA-Basis eine geringe Wärmeformbeständigkeit, die jedoch mit zunehmendem Kristallinitätsgrad von PLA deutlich über die Glasübergangstemperatur von PLA ansteigen kann. Zusammensetzungen auf PLA-Basis mit einem hohen Kristallinitätsgrad der PLA können daher für höchstens ca. 5 Minuten bei Temperaturen oberhalb ihrer Glasübergangstemperatur eingesetzt werden. Es ist jedoch zu beachten, dass die Kristallisation von PLA ein langsamer Prozess ist, für den PLA zudem erhitzt werden muss, was die kommerzielle Anwendung von PLA erschwert.

Aus dem Stand der Technik sind unterschiedliche Verfahren zur Erhöhung des Kristallinitätsgrades und zur Beschleunigung der Kristallisation von PLA bekannt. Ein Verfahren, das mittlerweile angewendet wird, besteht im Einsatz von Mischungen aus zwei verschiedenen PLA Sorten, die jeweils zu mindestens 95% aus L-Milchsäuremonomeren oder D-Milchsäuremonomeren bestehen. Diese beiden Sorten werden entsprechend als Poly(L-Milchsäure) (PLLA) und Poly(D-Milchsäure) (PDLA) bezeichnet. Bekanntermaßen ordnen sich PLLA und PDLA in ihren Mischungen zu speziellen, dreidimensionalen Stereokomplexen an, die in äußerst stabilen Kristallen mit Schmelzpunkten von deutlich oberhalb 200°C resultieren.

So ist in der EP 2 116 575 A1 die Herstellung von PDLA/PLLA Mischungen in einem bevorzugten Verhältnis von 40 Gew.% zu 60 Gew.% bis 60 Gew.% zu 40 Gew.% zur Ausbildung von Stereokomplexen mit hohem Schmelzpunkt zu einem hohen Grad beschrieben, was jedoch aufgrund des hohen Preises von PDLA zu teuren Polymerzusammensetzungen führt.

In der US 2008/0097074 A1 wird die Herstellung von PDLA/PLLA Mischungen beschrieben, die durch Zugabe eines Nukleierungsmittels auf Harnstoffbasis zur Ausbildung von Stereokomplexen mit hohem Schmelzpunkt zu einem hohen Grad führen. In der US 2008/0097074 A1 werden PLLA und PDLA besonders bevorzugt im Verhältnis von 40 Gew.% zu 60 Gew.% bis 60 Gew.% zu 40 Gew.% verwendet, was jedoch aufgrund des hohen Preises von PDLA zu teuren Polymerzusammensetzungen führt. Zudem muss ein sehr spezielles Nukleierungsmittel verwendet werden.

In der WO 2013/062412 A2 wird ebenfalls die Herstellung von PDLA/PLLA Mischungen beschrieben, die einen hohen Grad an Stereokomplexen aufweisen und einen hohen Schmelzpunkt sowie eine erhöhte Wärmeformstabilität haben. Jedoch wird das Verhältnis von PDLA zu PLLA nicht näher angegeben.

Den aus dem Stand der Technik bekannten Zusammensetzungen ist gemein, dass sie entweder einen sehr hohen Gehalt an PDLA verwenden oder aber keine Angaben zum Verhältnis von PDLA zu PLLA machen. Weiterhin bestehen die im Stand der Technik beschriebenen Zusammensetzungen nahezu ausschließlich aus PDLA und PLLA, welche teure Rohstoffe darstellen.

Die JP 2003 128900 A offenbart eine Polymerzusammensetzung enthaltend Polymilchsäure, einen Polyester auf Basis von Adipin- und Bernsteinsäure, sowie einen anorganischen Füllstoff.

Ausgehend vom voranstehend erläuterten Stand der Technik bestand eine Aufgabe der Erfindung darin, eine kostengünstige und/oder biologisch abbaubare Polymerzusammensetzung auf Polymilchsäurebasis bereitzustellen. Vorzugsweise soll es mit der Polymerzusammensetzung möglich sein, auf einfache und/oder wirtschaftliche Weise, Formteile, Folien oder Fasern herzustellen. Vorzugsweise erfolgt die Herstellung in wirtschaftlichen Verfahren. Die Formteile, Folien oder Fasern aus der Polymerzusammensetzung weisen vorzugsweise eine hohe Wärmeformbeständigkeit gemäß DIN EN ISO 75, Methode B, auf. Eine weitere Aufgabe der Erfindung bestand darin, eine Polymerzusammensetzung bereitzustellen, die zu einem Großteil aus nachwachsenden Rohstoffen hergestellt wird. Vorzugsweise weist die Polymerzusammensetzung alle zuvor genannten Merkmale gemeinsam auf.

Diese Aufgabe wird erfindungsgemäß durch die in Anspruch 1 und 13 angegebene Polymerzusammensetzung, das in Anspruch 12 angegebene Verfahren, das in Anspruch 14 angegebene Verfahren, die in Anspruch 17 angegebene Verwendung sowie die in Anspruch 18 genannten Erzeugnisse gelöst. Vorteilhafte Ausgestaltungen der Erfindung sind in den abhängigen Ansprüchen angegeben und werden nachfolgend wie der allgemeine Erfindungsgedanke im Einzelnen erläutert.

Die erfindungsgemäße Polymerzusammensetzung enthält, bezogen auf das Gesamtgewicht der Polymerzusammensetzung, folgende Komponenten:
a. 15 bis 70 Gew.% PLLA,
b. 0,1 bis 15 Gew.% PDLA,
c. 5 bis 40 Gew.% Polyester,
d. 5 bis 40 Gew.% organischer oder anorganischer Füllstoff.

Ein wesentliches Merkmal der erfindungsgemäßen Polymerzusammensetzung ist die Verwendung eines geringen Anteils an PDLA von 0,1 bis 15 Gew.% in Verbindung mit 5 bis 40 Gew.% eines Polyester und 5 bis 40 Gew.% eines organischen oder anorganischen Füllstoffs. Überraschend hat sich gezeigt, dass in der erfindungsgemäßen Polymerzusammensetzung die Verwendung von geringen Mengen an PDLA zusammen mit einem Polyester und einem organischen oder anorganischen Füllstoff ausreicht, um eine Polymerzusammensetzung zu erhalten, die eine hohe Wärmeformbeständigkeit gemäß DIN EN ISO 75, Methode B, aufweist und/oder biologisch abbaubar ist und/oder hauptsächlich aus biobasiertem Kohlenstoff besteht und/oder über gute mechanische Eigenschaften verfügt.

Ohne an eine bestimmte wissenschaftliche Theorie gebunden sein zu wollen, scheint bereits die Zugabe einer geringen Menge an PDLA in Kombination mit einem Polyester und einem Füllstoff zur weitgehenden Kristallisation der Polymilchsäure unter Ausbildung einer hohen Zahl an Stereokomplexen mit einem hohen Schmelzpunkt zu führen. Erfindungsgemäße Polymerzusammensetzungen können auch für Aufgaben eingesetzt werden, in denen Temperaturen oberhalb von 55°C herrschen. Der Effekt, dass schon eine geringe Menge an PDLA in Verbindung mit einem Polyester sowie einem Füllstoff zu Polymerzusammensetzungen mit einer hohen Wärmeformbeständigkeit führt, ist überraschend, da aus dem Stand der Technik vor allem Zusammensetzungen mit einem hohen Gehalt an PDLA bekannt sind.

Erfindungsgemäß enthält die Polymerzusammensetzung, bezogen auf die Gesamtmenge der in der Polymerzusammensetzung enthaltenen Komponenten PDLA und PLLA, 7 bis 13 Gew.% PDLA. Es hat sich herausgestellt, dass bei derartigen Mengen an PDLA im Verhältnis zur Gesamtmenge an PDLA und PLLA Polymerzusammensetzungen resultieren, die besonders gut weiterverarbeitet werden können. Insbesondere können mit derartigen Polymerzusammensetzungen kurze Zykluszeiten beim Spritzguss unter Beibehaltung guter Ergebnisse für die Wärmeformbeständigkeit erzielt werden.

Wie eingangs erläutert bestimmt sich die Reinheit der Komponenten PLLA und PDLA durch den Gehalt an L-Milchsäuremonomeren (für PLLA) oder D-Milchsäuremonomeren (für PDLA). Erfindungsgemäß enthält die Komponente PLLA vorzugsweise mindestens 90% L-Milchsäuremonomere. Optimale Ergebnisse stellen sich ein, wenn die Komponente PLLA mindestens 94%, insbesondere mindestens 98% oder 99%, L-Milchsäuremonomere enthält. Erfindungsgemäß enthält die Komponente PDLA vorzugsweise mindestens 90% D-Milchsäuremonomere. Optimale Ergebnisse stellen sich ein, wenn die Komponente PDLA mindestens 94%, insbesondere mindestens 98% oder 99%, D-Milchsäuremonomere enthält.

Gemäß einer weiteren Ausführungsform der Erfindung enthält die Polymerzusammensetzung, bezogen auf das Gesamtgewicht der Polymerzusammensetzung, 25 bis 65 Gew.%, bevorzugt 35 bis 60 Gew.%, noch bevorzugt 45 bis 60 Gew.% PLLA. Versuche haben gezeigt, dass, wenn weniger als 15 Gew.% PLLA, bezogen auf das Gesamtgewicht der Polymerzusammensetzung, verwendet wird, ein Material mit einer unzureichenden Wärmeformbeständigkeit erhalten wird, bei Verwendung von mehr als 70 Gew.%, bezogen auf das Gesamtgewicht der Polymerzusammensetzung, ist das resultierende Material für die meisten praktischen Anwendungen zu spröde.

Erfindungsgemäß enthält die Polymerzusammensetzung bezogen auf das Gesamtgewicht der Polymerzusammensetzung, 5 bis 35 Gew.%, bevorzugt 15 bis 25 Gew.% eines organischen oder anorganischen Füllstoffs.

Bevorzugte anorganische oder organische Füllstoffe gemäß der Erfindung sind ausgewählt aus der Gruppe bestehend aus Kreide, Kalk, Talk, Calciumcarbonat, Titandioxid, Aluminiumoxid, Magnesiumoxid, Silikate, Kaolin, Dolomit, Bornitrid, Terbiumoxid, Stärke, modifizierte Stärke, thermoplastische Stärke, Cellulose, Cyclodextrine, Saccharin, Thymin, Uracil, Orotsäure, Cyanursäure, Polyvinylalkohol, Polyhydroxyalkanoate, Polyhydroxybutyrat, Polybutylensuccinat, Polybutylenterephtalat, Ecoflex und Mischungen davon.

In einer weiteren, vorteilhaften Ausgestaltung der Erfindung enthält die Polymerzusammensetzung, bezogen auf das Gesamtgewicht der Polymerzusammensetzung, 5 bis 35 Gew.%, bevorzugt 10 bis 30 Gew.%, noch bevorzugt 15 bis 25 Gew.% des Polyesters.

Erfindungsgemäß ist der Polyester ein statistischer Copolyester auf Basis von mindestens Adipin- oder Sebacinsäure. Gemäß einer noch bevorzugten Ausgestaltung der Erfindung ist der Polyester ein statistischer aliphatisch-aromatischer Copolyester auf Basis von 1,4-Butandiol, Adipinsäure und/oder Sebacinsäure und Terephthalsäure bzw. Terephthalsäurederivat, insbesondere Dimethylterephthalat DMT. Dieser kann insbesondere eine Glasübergangstemperatur von -25 bis -40°C, insbesondere -30 bis -35°C und/oder einen Schmelzbereich von 100 bis 120°C, insbesondere von 105 bis 115°C, aufweisen.

Nach einer weiteren Ausführungsform der Erfindung enthält die Polymerzusammensetzung gemäß ASTM 6866 mindestens 40%, bevorzugt 50%, noch bevorzugt 60% biobasierten Kohlenstoff.

Erfindungsgemäß ist die Polymerzusammensetzung gemäß EN 13432 biologisch abbaubar, bevorzugt vollständig biologisch abbaubar.

Die besonderen thermischen Eigenschaften der erfindungsgemäßen Polymerzusammensetzung lassen sich sehr gut mittels dynamischer Differenzkalorimetrie (Differential Scanning Calorimetry, DSC) nachweisen. Wird eine Polymerprobe einem definierten Aufheiz-/Abkühlprogramm unterzogen, so werden Phasenübergänge, welche mit einem Energieumsatz verbunden sind (Glasübergang, Kristallisation, Schmelzen, etc.), in Form exothermer (z.B. Kristallisation) oder endothermer (z.B. Schmelzen) Peaks in DSC Diagrammen aufgezeichnet. Voraussetzung für das Erscheinen eines Peaks in der DSC-Messung ist folglich, dass der Phasenübergang während der Messung, also beim Durchlaufen des Temperaturprogramms, erfolgt. So erzeugt eine amorphe Probe, welche während des Aufheizens kristallisiert, einen exothermen Peak in der Aufheizphase. Abhängig von der Anzahl und Art der Phasenübergänge, die während des Durchlaufens des Temperaturprogramms erfolgen, ergeben sich entsprechend viel exotherme und endotherme Peaks, wobei die Glasübergangstemperatur nicht als Peak, sondern als Stufe zu erkennen ist. Üblicherweise wird für die Messung ein Temperaturprogramm, das aus einem Aufheiz-Abkühl-Aufheiz-Zyklus besteht, verwendet. Bei diesem Temperaturprogramm wird die Probe zunächst auf einer voreingestellten Anfangstemperatur für 2 bis 5 min equilibriert. Nach dieser ersten Equilibrierphase wird die Probe mit einer gleichbleibenden Aufheizrate bis zu einer voreingestellten ersten Zieltemperatur erhitzt. Üblicherweise wird eine Aufheizrate von 10°C/min eingesetzt. Bei der ersten Zieltemperatur wird die Probe nochmals für 2 bis 5 min equilibriert und anschließend mit einer konstanten Abkühlrate bis zu einer voreingestellten zweiten Zieltemperatur gekühlt. Üblicherweise wird eine Abkühlrate von 10°C/min eingesetzt. Bei der zweiten Zieltemperatur wird die Probe nochmals für 2 bis 5 min equilibriert und anschließend mit einer gleichbleibenden Aufheizrate bis zu einer voreingestellten dritten Zieltemperatur erhitzt, auf welcher die Probe für 2 bis 5 min konstant gehalten wird, bevor die Messung beendet wird. Üblicherweise wird die gleiche Aufheizrate wie bei der ersten Aufheizphase, z.B. 10°C/min, eingesetzt. Die erste und die dritte Zieltemperatur können gleich oder verschieden sein, ebenso können die Anfangs- und die zweite Zieltemperatur gleich oder verschieden sein.

Gemäß einer weiteren Ausgestaltung der Erfindung tritt in einem DSC Diagramm der Polymerzusammensetzung, welches in einem Aufheiz-Abkühl-Aufheiz-Zyklus beginnend bei einer Anfangstemperatur von 15°C mit den Zieltemperaturen von 220°C-15°C-260°C mit Aufheiz- und Abkühlraten von je 10°C/min und Equilibrierzeiten bei den Zieltemperaturen von je 5 min gemessen wurde, in der Abkühlphase, insbesondere in der Abkühlphase zur zweiten Zieltemperatur, ein exothermer Peak in einem Temperaturbereich von 80°C bis 120°C, bevorzugt von 90°C bis 110°C, auf.

In einer weiteren Ausführungsform der Erfindung tritt in einem DSC Diagramm der Polymerzusammensetzung, welches in einem Aufheiz-Abkühl-Aufheiz-Zyklus beginnend bei einer Anfangstemperatur von 15°C mit den Zieltemperaturen von 220°C-15°C-260°C mit Aufheiz- und Abkühlraten von je 10°C/min und Equilibrierzeiten bei den Zieltemperaturen von je 5 min gemessen wurde, in der zweiten Aufheizphase ein endothermer Peak bei Temperaturen oberhalb von 200°C, bevorzugt oberhalb von 210°C, noch bevorzugt oberhalb von 215°C, auf. Der endotherme Peak oberhalb von 200°C kann zusätzlich auch schon in der ersten Aufheizphase auftreten.

In einer weiter bevorzugten Ausführungsform der Erfindung tritt in der ersten, der zweiten oder in beiden Aufheizphasen ein weiterer endothermer Peak bei Temperaturen von 140°C bis 190°C auf.

Die erfindungsgemäße Polymerzusammensetzung kann neben den Hauptbestandteilen PLLA, PDLA, Polyester und organischem oder anorganischem Füllstoff noch weitere Bestandteile, insbesondere weitere Polymere und/oder übliche Additive, wie zum Beispiel Verarbeitungshilfsmittel, Weichmacher, Stabilisatoren und/oder Antiflammmittel, enthalten.

Insbesondere kann die erfindungsgemäße Polymerzusammensetzung Polycaprolacton enthalten. Durch Zusatz von Polycaprolacton können die mechanischen Eigenschaften der Polymerzusammensetzung in vorteilhafterweise beeinflusst werden.

Gemäß einer bevorzugten Ausführungsform der Erfindung weist die Polymerzusammensetzung einen Wassergehalt von weniger als 0,1 Gew.%, insbesondere von weniger als 0,05 Gew.% oder 0,04 Gew.%, jeweils bezogen auf das Gesamtgewicht der Polymerzusammensetzung, auf. Praktische Versuche haben gezeigt, dass durch Wassergehalte von weniger als 0,1 Gew.% der unerwünschte Abbau der erfindungsgemäßen Polymerzusammensetzung bei der späteren Verarbeitung vermindert werden kann.

Die Erfindung stellt ferner Verfahren bereit, mit denen es möglich ist, die oben beschriebenen Polymerzusammensetzungen zu erhalten.

Grundsätzlich beinhalten die erfindungsgemäßen Verfahren die folgenden Schritte, wobei die einzelnen Schritte gleichzeitig oder nacheinander und in beliebiger Reihenfolge und Häufigkeit durchgeführt werden können:
a. Herstellen eines Gemischs enthaltend, bezogen auf das Gesamtgewicht des Gemischs, wenigstens die folgenden Komponenten:
   i. 15 bis 70 Gew.% PLLA,
   ii. 0,1 bis 15 Gew.% PDLA,
   iii. 5 bis 40 Gew.% Polyester,
   iv. 5 bis 40 Gew.% organischer oder anorganischer Füllstoff.
b. Homogenisieren des Gemischs unter Zuführen von thermischer und/oder mechanischer Energie.

Bevorzugt werden die Verfahrensschritte in der oben angegebenen Reihenfolge durchgeführt.

Das erfindungsgemäße Verfahren sieht vor, dass das Gemisch homogenisiert wird. Das Homogenisieren kann durch beliebige, dem auf dem Gebiet der Kunststofftechnik tätigen Fachmann geläufige Maßnahmen erfolgen. Vorzugsweise erfolgt das Homogenisieren des Gemischs durch Dispergieren, Rühren, Kneten und/oder Extrudieren. Gemäß einer bevorzugten Ausführungsform der Erfindung wirken bei der Homogenisierung Scherkräfte auf das Gemisch ein. Geeignete Herstellungsverfahren für PDLA/PLLA Mischungen, die auch auf die Herstellung des erfindungsgemäßen polymeren Materials analog anwendbar sind, sind beispielsweise in der EP 2 116 575 A1 beschrieben.

Gemäß einer bevorzugten Ausführungsform der Erfindung wird das Gemisch während des Homogenisierens (z.B. in einem Extruder oder in einem Schmelzkneter) erwärmt, vorzugsweise auf eine Temperatur von 60°C bis 250°C, insbesondere von 90°C bis 200°C.

Als für das erfindungsgemäße Verfahren besonders geeigneter Polyester hat sich ein statistischer Copolyester auf Basis von mindestens Adipin- und/oder Sebacinsäure erwiesen.

Das vorstehend zu den Komponenten der Polymerzusammensetzung Gesagte gilt vorzugsweise gleichermaßen auch für die Komponenten des erfindungsgemäßen Verfahrens.

Gemäß einer bevorzugten Ausführungsform des erfindungsgemäßen Verfahrens wird der Wassergehalt der Polymerzusammensetzung auf weniger als 0,1 Gew.%, insbesondere weniger als 0,05 Gew.% oder 0,04 Gew.%, jeweils bezogen auf das Gesamtgewicht der Polymerzusammensetzung, eingestellt. Hier angegebene Wassergehalte beziehen sich auf das nach dem Homogenisieren erhaltene, insbesondere das aus dem Extruder austretende, Material. Zur Bestimmung des Wassergehalts wird eine Probe des schmelzförmigen, homogenisierten Materials direkt nach dem Homogenisieren (das heißt typischerweise unmittelbar nach Austritt aus dem Extruder) in einem verschließbaren Gefäß aufgefangen und dieses luftdicht verschlossen. Dabei ist darauf zu achten, dass das Gefäß möglichst vollständig mit homogenisiertem Material gefüllt ist, damit der Lufteinschluss in dem Gefäß möglichst gering gehalten wird. Nach Abkühlen des verschlossenen Gefäßes wird dieses geöffnet, eine Probe genommen und der Wassergehalt mittels Karl-Fischer Titration bestimmt.

Vorzugsweise erfolgt die Einstellung des Wassergehalts durch Trocknen während des Homogenisierens. Der Trocknungsvorgang kann beispielsweise durch Entgasen des Gemischs bzw. der Schmelze, zweckmäßigerweise durch Abziehen von Wasserdampf während des Homogenisierens bzw. Extrudierens, erfolgen.

Weiterhin stellt die Erfindung Verfahren bereit, mit denen es möglich ist, Formteile, Folien oder Fasern aus den oben beschriebenen Polymerzusammensetzungen zu erhalten.

Grundsätzlich beinhaltet das erfindungsgemäße Verfahren zur Herstellung von Formteilen die folgenden Schritte:
a. Einbringen einer oben beschriebenen Polymerzusammensetzung in eine Form;
b. Formen des Formteils; und
c. Entfernen des Formteils aus der Form.

Diese Schritte bilden zusammen einen Zyklus, der üblicherweise in einer bestimmten Zeit, der Zykluszeit, durchgeführt wird und beliebig oft wiederholt werden kann. Dabei hat es sich als vorteilhaft erwiesen, wenn die Form, in welche die Polymerzusammensetzung in Schritt a. des Verfahrens zur Herstellung von Formteilen, Folien oder Fasern eingebracht wird, auf 30 bis 130°C, bevorzugt 30 bis 100°C, weiter bevorzugt auf 45 bis 85°C erhitzt und während des Verfahrens im Wesentlichen auf dieser Temperatur gehalten wird. Erzeugnisse, welche mit einer der oben beschriebenen Polymerzusammensetzungen und dem oben erwähnten Verfahren hergestellt wurden, kristallisieren schnell und zu einem so hohen Prozentsatz, dass sie eine erhöhte Wärmeformbeständigkeit aufweisen und auch bei Temperaturen über der Glasübergangstemperatur von PLA eingesetzt werden können. Die Verwendung einer entsprechend temperierten Form begünstigt dabei die Kristallisationsrate, so dass die Formteile nach einer kürzeren Zeit aus der Form entfernt werden können, ohne sich zu verformen.

Aus ökonomischen und verfahrenstechnischen Gründen hat es sich als vorteilhaft erwiesen, wenn das Verfahren zur Herstellung von Formteilen innerhalb einer Zykluszeit von maximal 60 Sekunden, bevorzugt maximal 45 Sekunden, weiter bevorzugt maximal 30 Sekunden durchgeführt wird. Diese erhöht die Produktionskapazität und Wirtschaftlichkeit des Verfahrens.

Die erfindungsgemäßen Polymerzusammensetzungen eignen sich für die verschiedensten Zwecke. Insbesondere eignen sich die Zusammensetzungen zur Herstellung von Formteilen, Folien oder Fasern. Aufgrund der raschen Kristallisation eignen sich die Zusammensetzungen besonders für die Herstellung von Formteilen. Demgemäß betrifft die Erfindung ferner auch aus den erfindungsgemäßen Polymerzusammensetzungen hergestellte Formteile, Folien und Fasern.

Das vorstehend zur Wärmeformbeständigkeit, zur biologischen Abbaubarkeit und zum Gehalt an biobasiertem Kohlenstoff der Polymerzusammensetzung Gesagte gilt gleichermaßen auch für die erfindungsgemäßen Formteile. So sieht eine vorteilhafte Ausführungsform der Erfindung vor, dass die Formteile, Folien oder Fasern gemäß DIN EN ISO 75, Methode B, bis 55°C, bevorzugt bis 65°C, weiter bevorzugt bis 70°C, noch bevorzugt bis 75°C, noch bevorzugt bis 80°C, weiter bevorzugt bis 85°C, noch bevorzugt bis 90°C, noch weiter bevorzugt bis 95°C wärmeformbeständig sind und/oder gemäß EN 13432 biologisch abbaubar, bevorzugt vollständig biologisch abbaubar sind und/oder gemäß ASTM 6866 mindestens 50% biobasierten Kohlenstoff enthalten.

Aufgrund ihrer hohen Wärmeformbeständigkeit eignen sich Formteile aus der erfindungsgemäßen Polymerzusammensetzung hervorragend als Behälter oder Kapseln für Kaffee in den entsprechenden Kaffeezubereitungssystemen. Eine solche besonders bevorzugte Ausführungsform der erfindungsgemäßen Formteile wird nachstehend unter Bezugnahme auf die folgenden Zeichnungen näher beschrieben.
- Fig. 1: zeigt eine schematische Darstellung einer besonders bevorzugten Ausführungsform der erfindungsgemäßen Formteile in Aufsicht.
- Fig. 2: zeigt eine schematische Darstellung einer besonders bevorzugten Ausführungsform der erfindungsgemäßen Formteile im Querschnitt.
- Fig. 3: zeigt ein DSC Diagramm der Rezeptur A aus dem Beispiel 1 (Vergleichsbeispiel).
- Fig. 4: zeigt ein DSC Diagramm der Rezeptur B aus dem Beispiel 2.

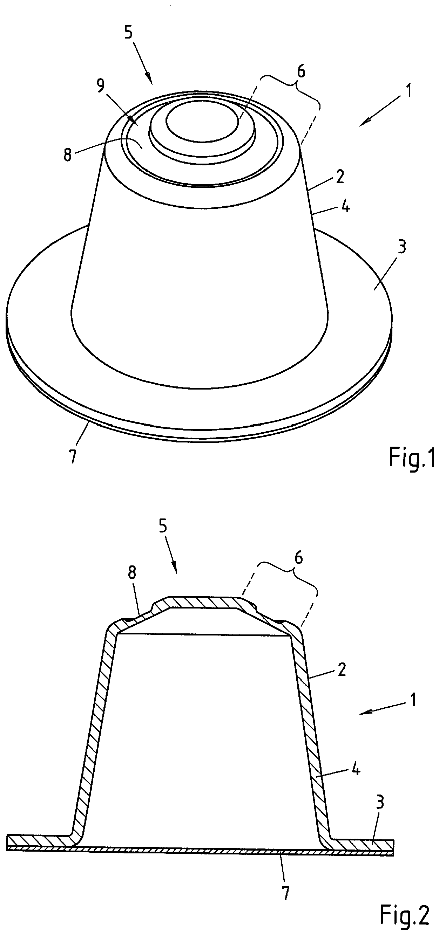

Figur 1 zeigt eine Aufsicht auf eine besonders bevorzugte Ausführungsform 1 der erfindungsgemäßen Formteile, umfassend einen frustokonischen Körper 2 mit einem Rand 3, einer Seitenwand 4, einer Einlasswand 5, wobei die Einlasswand 5 einen flachen oder konvexen Teil 6 umfassen kann, und einer tiefer gelegenen Zuführungswand 7, die den Rand 3 versiegelt, wobei die flache oder konvexe Portion 6 eine zurückgezogene oder reliefartige Struktur 8 aufweist, wobei diese zurückgezogene oder reliefartige Struktur 8 das Durchstoßen dieser Struktur mit Klingen, die zum Injektionsgerät gehören, erleichtert und sich auf einem im Wesentlichen kreisförmigen Pfad 9 befindet, dessen Durchmesser durch den Durchmesser der ebenfalls kreisförmig angeordneten Klingen definiert ist.

Figur 2 zeigt einen Querschnitt einer besonders bevorzugten Ausführungsform 1 der erfindungsgemäßen Formteile, umfassend einen frustokonischen Körper 2 mit einem Rand 3, einer Seitenwand 4, einer Einlasswand 5, wobei die Einlasswand 5 einen flachen oder konvexen Teil 6 umfassen kann, und einer tiefer gelegenen Zuführungswand 7, die den Rand 3 versiegelt, wobei die flache oder konvexe Portion 6 eine zurückgezogene oder reliefartige Struktur 8 aufweist, wobei diese zurückgezogene oder reliefartige Struktur 8 das Durchstoßen dieser Struktur mit Klingen, die zum Injektionsgerät gehören, erleichtert und sich auf einem im Wesentlichen kreisförmigen Pfad befindet, dessen Durchmesser durch den Durchmesser der ebenfalls kreisförmig angeordneten Klingen definiert ist.

Gemäß einer noch bevorzugten Ausführungsform der erfindungsgemäßen Formteile versiegelt die tiefer gelegene Zuführungswand 7 den Rand 3 der Kapsel im Wesentlichen gasdicht. Vorteilhaft an dieser Ausführungsform ist die Tatsache, dass die Haltbarkeit von in der Kapsel befindlichen, oxidierbaren Stoffen durch eine gasdichte Verpackung verlängert wird.

In einer noch weiter bevorzugten Ausgestaltungsform der erfindungsgemäßen Formteile ist die tiefer gelegene Zuführungswand 7 gemäß EN 13432 biologisch abbaubar, bevorzugt vollständig biologisch abbaubar, so dass diese Ausgestaltungsform der erfindungsgemäßen Formteile in ihrer Gesamtheit biologisch abbaubar ist.

Erfindungsgemäße Folien können Blas-, Flach- oder Gießfolien sein. Bevorzugte Foliendicken für erfindungsgemäße Blasfolien betragen von 0,012 bis 0,1 mm, für erfindungsgemäße Flachfolien von 0,15 bis 0,5 mm und für erfindungsgemäße Gießfolien von 0,01 bis 0,5 mm.

Das Prinzip der Erfindung soll im Folgenden an Beispielen näher erläutert werden.

Für die Vergleichs- und Ausführungsbeispiele wurden folgende Materialien verwendet: Polymilchsäure, PLA (INGEO 2003D, NATUREWORKS); Poly(butylenadipat-co-terephtalat), PBAT (ECOFLEX F Blend C 1201, BASF); Calciumcarbonat (HYDROCARB, OMYA); PLLA (SYNTERRA PLLA 1510, SYNBRA); PDLA (SYNTERRA PDLA 1010, SYNBRA).

### Beispiel 1 (Vergleichsbeispiel):

Mit einem Zweiwellenextruder (Gleichläufer) des Typs *Werner* & *Pfleiderer (COPERION)* ZSK 40, Schneckendurchmesser 40 mm, L/D = 42, wurde folgende Rezeptur compoundiert (dosierte Anteile in Massenprozent):
Rezeptur A:
59,4 Gew.% PLA
22,9 Gew.% PBAT
17,7Gew.% CaCO₃

Dabei wurden folgende Compoundierparameter eingehalten:

**Tab. 1: Temperaturprofil ZSK 40**

| Zone 1 | Zone 2 | Zone 3 | Zone 4 | Zone 5 | Zone 6 | Zone 7 | Zone 8 | Düse |
|---|---|---|---|---|---|---|---|---|
| 25°C | 170°C | 170°C | 170°C | 170°C | 170°C | 170°C | 170°C | 168°C |

| | |
|---|---|
| Schmelzetemperatur bei Düsenaustritt: | 165°C |
| Drehzahl: | 180 min⁻¹ |
| Durchsatz | 40 kg/h |
| Entgasung | nein |

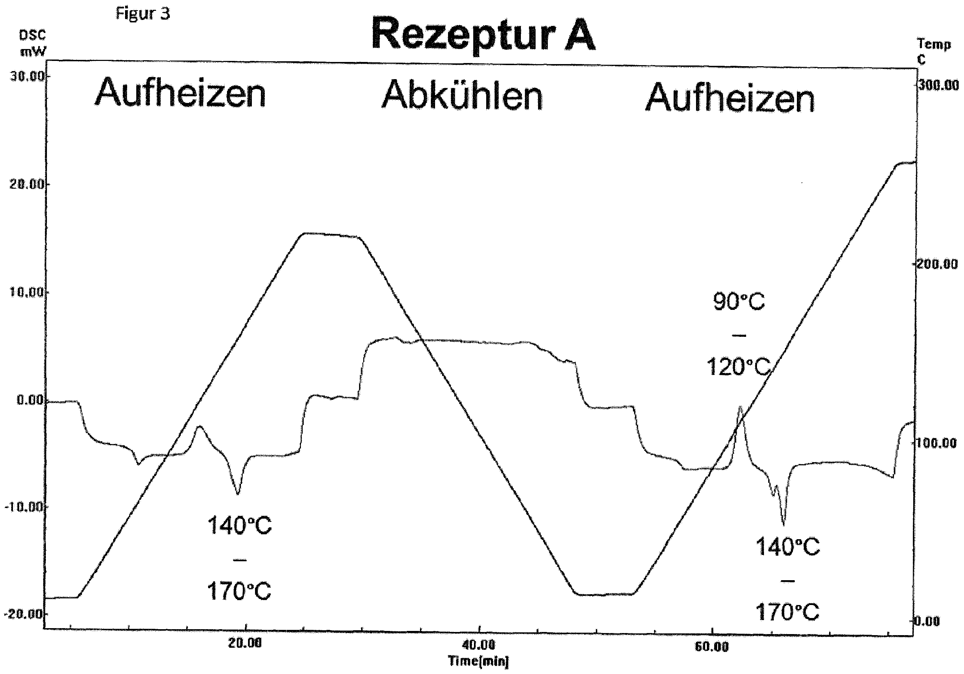

Ein DSC Diagramm der Rezeptur A ist in Figur 3 abgebildet. Auffällig an dem DSC Diagramm in Figur 3 sind die Abwesenheit von Peaks in der Abkühlphase zur zweiten Zieltemperatur und die Abwesenheit von Peaks oberhalb von 200°C.

Das Granulat wurde in einer Spritzgussanlage des Typs ARBURG ALLROUNDER 270 M zu Probekörpern verarbeitet.

Dabei wurden folgende Verarbeitungsparameter eingestellt:

**Tab. 2: Verarbeitungsparameter Spritzguss**

| Zone 1 | Zone 2 | Zone 3 | Zone 4 |
|---|---|---|---|
| 25°C | 180°C | 180°C | 180°C |

| | |
|---|---|
| Werkzeugtemperatur: | 55°C |
| Zykluszeit: | 25 s |

Die erhaltenen Probekörper zeichneten sich durch eine geringe Wärmeformbeständigkeit bei Temperaturen oberhalb von 55°C aus.

Die mechanischen Eigenschaften der Probekörper wurden nach einer Lagerzeit von 24 Stunden bei Raumtemperatur und Umgebungsatmosphäre wie folgt bestimmt:

**Tab. 3: Mechanische Eigenschaften der Probekörper nach 24 h**

| E-Modul [GPa] EN ISO 527 | Zugfestigkeit [MPA] EN ISO 527 | Dehnung bei Zugfestigkeit [%] EN ISO 527 | Bruchspannung [MPa] EN ISO 527 | Schlagzähigkeit bei 23°C [KJ/m²] EN ISO 179/1 | Biegefestigkeit [MPa] EN ISO 178 | Biegemodul [GPa] EN ISO 178 |
|---|---|---|---|---|---|---|
| 2,4 | 28 | 2 | 34 | 140 | 60 | 2,5 |

### Beispiel 2:

Mit einem Zweiwellenextruder (Gleichläufer) des Typs *Werner* & *Pfleiderer (COPERION)* ZSK 40, Schneckendurchmesser 40 mm, L/D = 42, wurde folgende Rezeptur compoundiert (dosierte Anteile in Massenprozent):

**Rezeptur B:**

| | |
|---|---|
| 53,5 Gew.% | PLLA |
| 5,9 Gew.% | PDLA |
| 22,9 Gew.% | PBAT |
| 17,7 Gew.% | CaCO₃ |

Dabei wurden folgende Compoundierparameter eingehalten:

**Tab. 4: Temperaturprofil ZSK 40**

| Zone 1 | Zone 2 | Zone 3 | Zone 4 | Zone 5 | Zone 6 | Zone 7 | Zone 8 | Düse |
|---|---|---|---|---|---|---|---|---|
| 25°C | 170°C | 170°C | 170°C | 170°C | 170°C | 170°C | 169°C | 167°C |

| | |
|---|---|
| Schmelzetemperatur bei Düsenaustritt: | 165°C |
| Drehzahl: | 185 min⁻¹ |
| Durchsatz | 41 kg/h |
| Entgasung | nein |

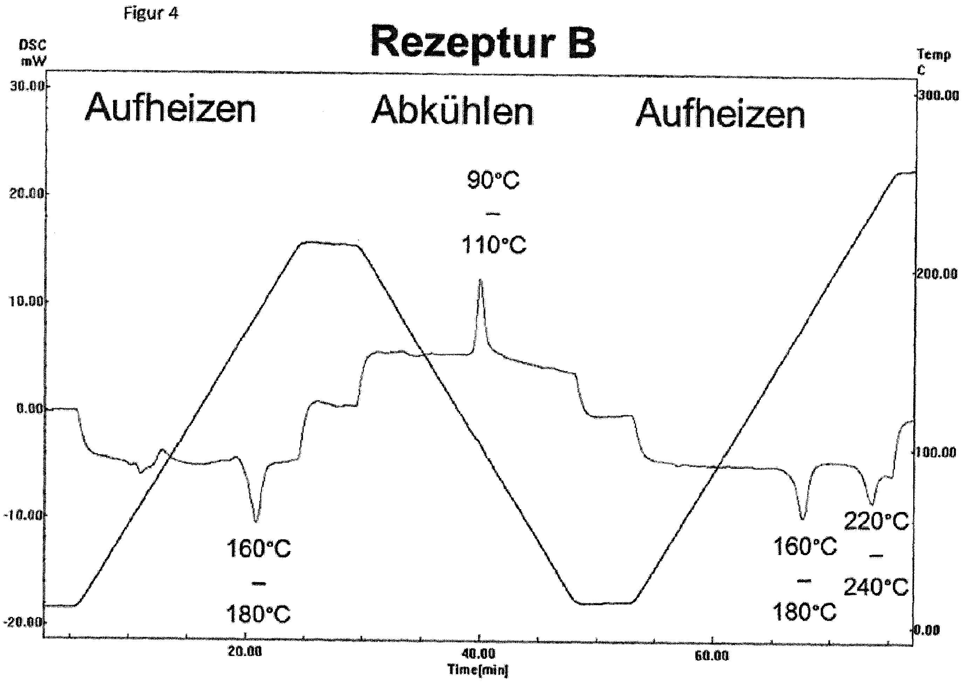

Ein DSC Diagramm der Rezeptur B ist in Figur 4 abgebildet. Auffällig am DSC Diagramm von Rezeptur B in Figur 4 sind der exotherme Peak in der Abkühlphase zur zweiten Zieltemperatur (bei ca. 40 min) in einem Temperaturbereich von 90 bis 110°C sowie der endotherme Peak in der zweiten Aufheizphase (bei ca. 74 min) in einem Temperaturbereich von 220 bis 240°C.

Das Granulat wurde in einer Spritzgussanlage des Typs ARBURG ALLROUNDER 270 M zu Probekörpern verarbeitet.

Dabei wurden folgende Verarbeitungsparameter eingestellt:

**Tab. 5: Verarbeitungsparameter Spritzguss**

| Zone 1 | Zone 2 | Zone 3 | Zone 4 |
|---|---|---|---|
| 25°C | 180°C | 180°C | 180°C |

| | |
|---|---|
| Werkzeugtemperatur: | 55°C |
| Zykluszeit: | 20 s |

Die erhaltenen Probekörper zeichneten sich durch eine erhöhte Wärmeformbeständigkeit bei Temperaturen oberhalb von 55°C und bis zu 95°C aus.

Die mechanischen Eigenschaften der Probekörper wurden nach einer Lagerzeit von 24 Stunden bei Raumtemperatur und Umgebungsatmosphäre wie folgt bestimmt:

**Tab. 6: Mechanische Eigenschaften der Probekörper nach 24 h**

| E-Modul [GPa] EN ISO 527 | Zugfestigkeit [MPA] EN ISO 527 | Dehnung bei Zugfestigkeit [%] EN ISO 527 | Bruchspannung [MPa] EN ISO 527 | Schlagzähigkeit bei 23°C [KJ/m²] EN ISO 179/1 | Biegefestigkeit [MPa] EN ISO 178 | Biegemodul [GPa] EN ISO 178 |
|---|---|---|---|---|---|---|
| 2,4 | 31 | 2 | 30 | 80 | 53 | 2,5 |

Auffällig beim Vergleich der Ergebnisse der beiden Zusammensetzungen, zusammengestellt in den Tabellen 3 und 6 sowie in den DSC Diagrammen in Figur 3 und 4, sind die auffallend besseren thermischen Eigenschaften von Rezeptur B, die sich vor allem im DSC Diagramm in einem exothermen Kristallisationspeak in der Abkühlphase im Temperaturbereich von 90°C bis 110°C und in einem höheren Schmelzpunkt in einem Temperaturbereich von 220°C bis 240°C äußern. Diese beiden Peaks sind im DSC Diagramm von Rezeptur A nicht vorhanden und deuten auf eine langsamere Kristallisation und die fehlende Ausbildung von Stereokomplexen von PLLA und PDLA hin. Im Einklang mit den DSC-Messungen weist Rezeptur A eine merkbar höhere Schlagzähigkeit auf, welche vermutlich durch einen niedrigeren Kristallisationsgrad im Probekörper aus Rezeptur A bedingt wird. Trotz des höheren Kristallisationsgrades im Probekörper aus Rezeptur B und den daraus resultierenden verbesserten thermischen Eigenschaften verfügen Formteile aus der Rezeptur B dennoch über sehr gute und teilweise sogar gegenüber Rezeptur B leicht verbesserte mechanische Eigenschaften, wie z.B. an der erhöhten Zugfestigkeit zu sehen ist.

Die Erfindung ist vorstehend anhand von Ausführungsbeispielen exemplarisch beschrieben worden. Dabei versteht sich, dass die Erfindung nicht auf die beschriebenen Ausführungsbeispiele beschränkt ist. Vielmehr ergeben sich für den Fachmann im Rahmen der Erfindung vielfältige Abwandlungs- und Modifikationsmöglichkeiten und der Schutzumfang der Erfindung wird insbesondere durch die nachfolgenden Patentansprüche festgelegt.

## Patentansprüche

1. Polymerzusammensetzung enthaltend, bezogen auf das Gesamtgewicht der Polymerzusammensetzung, folgende Komponenten:
a. 15 bis 70 Gew.% PLLA,
b. 0,1 bis 15 Gew.% PDLA,
c. 5 bis 40 Gew.% Polyester,
d. 5 bis 40 Gew.% organischer oder anorganischer Füllstoff,
**dadurch gekennzeichnet, dass** die Polymerzusammensetzung 7 bis 13 Gew.%, PDLA, bezogen auf die Gesamtmenge der in der Polymerzusammensetzung enthaltenen Komponenten PDLA und PLLA, enthält und dass die Komponente c. ein statistischer Copolyester auf Basis von mindestens Adipin- und/oder Sebacinsäure ist.

2. Polymerzusammensetzung gemäß Anspruch 1, **dadurch gekennzeichnet, dass** die Polymerzusammensetzung 25 bis 65 Gew.%, 35 bis 60 Gew.% oder 45 bis 60 Gew.% der Komponente a., jeweils bezogen auf das Gesamtgewicht der Polymerzusammensetzung, enthält.

3. Polymerzusammensetzung gemäß einem der Ansprüche 1 oder 2, **dadurch gekennzeichnet, dass** die Polymerzusammensetzung 5 bis 35 Gew.%, 10 bis 30 Gew.% oder 15 bis 25 Gew.% der Komponente c., jeweils bezogen auf das Gesamtgewicht der Polymerzusammensetzung, enthält.

4. Polymerzusammensetzung gemäß einem der vorstehenden Ansprüche, **dadurch gekennzeichnet, dass** die Polymerzusammensetzung 5 bis 35 Gew.% oder 15 bis 25 Gew.% der Komponente d., jeweils bezogen auf das Gesamtgewicht der Polymerzusammensetzung, enthält.

5. Polymerzusammensetzung gemäß einem der vorstehenden Ansprüche, **dadurch gekennzeichnet, dass** die Komponente c. ein statistischer aliphatisch-aromatischer Copolyester auf Basis von 1,4-Butandiol, Adipinsäure und/oder Sebacinsäure und Terephthalsäure bzw. Terephthalsäurederivat, insbesondere Dimethylterephthalat DMT, ist.

6. Polymerzusammensetzung gemäß einem der vorstehenden Ansprüche, **dadurch gekennzeichnet, dass** die Komponente d. ausgewählt ist aus der Gruppe bestehend aus Kreide, Kalk, Talk, Calciumcarbonat, Aluminiumoxid, Magnesiumoxid, Silikate, Kaolin, Dolomit, Bornitrid, Terbiumoxid, Stärke, modifizierte Stärke, thermoplastische Stärke, Cellulose, Cyclodextrine, Saccharin, Thymin, Uracil, Orotsäure, Cyanursäure, Polyvinylalkohol, Polyhydroxyalkanoate, Polyhydroxybutyrat, Polybutylensuccinat, Polybutylenterephtalat, Ecoflex und Mischungen davon.

7. Polymerzusammensetzung gemäß einem der vorstehenden Ansprüche, **dadurch gekennzeichnet, dass** die Polymerzusammensetzung gemäß ASTM 6866 mindestens 40 %, 50 %, oder 60 % biobasierten Kohlenstoff enthält.

8. Polymerzusammensetzung gemäß einem der vorstehenden Ansprüche, **dadurch gekennzeichnet, dass** die Polymerzusammensetzung gemäß EN 13432 biologisch abbaubar, insbesondere vollständig biologisch abbaubar, ist.

9. Polymerzusammensetzung gemäß einem der vorstehenden Ansprüche, **dadurch gekennzeichnet, dass** in einem DSC Diagramm der Polymerzusammensetzung, welches in einem Aufheiz-Abkühl-Aufheiz-Zyklus beginnend bei 15°C mit den Zieltemperaturen 220°C-15°C-260°C mit Aufheiz- und Abkühlraten von je 10°C/min und Equilibrierzeiten bei den Zieltemperaturen von je 5 min gemessen wurde, in der Abkühlphase ein exothermer Peak in einem Temperaturbereich von 80°C bis 120°C, insbesondere von 90°C bis 110°C, auftritt.

10. Polymerzusammensetzung gemäß einem der vorstehenden Ansprüche, **dadurch gekennzeichnet, dass** in einem DSC Diagramm der Polymerzusammensetzung, welches in einem Aufheiz-Abkühl-Aufheiz-Zyklus beginnend bei 15°C mit den Zieltemperaturen 220°C-15°C-260°C mit Aufheiz- und Abkühlraten von je 10°C/min und Equilibrierzeiten bei den Zieltemperaturen von je 5 min gemessen wurde, in der zweiten Aufheizphase ein endothermer Peak bei Temperaturen oberhalb von 200°C, insbesondere oberhalb von 210°C oder 215°C auftritt.

11. Polymerzusammensetzung gemäß Anspruch 10, **dadurch gekennzeichnet, dass** in den Aufheizphasen ein weiterer endothermer Peak bei Temperaturen von 140°C bis 190°C auftritt.

12. Verfahren zur Herstellung einer Polymerzusammensetzung gemäß einem der Ansprüche 1 bis 11, **gekennzeichnet durch**:
a. Herstellen eines Gemischs enthaltend, bezogen auf das Gesamtgewicht des Gemischs, wenigstens die folgenden Komponenten:
i. 15 bis 70 Gew.% PLLA,
ii. 0,1 bis 15 Gew.% PDLA,
iii. 5 bis 40 Gew.% Polyester,
iv. 5 bis 40 Gew.% organischer oder anorganischer Füllstoff.
b. Homogenisieren des Gemischs unter Zuführen von thermischer und/oder mechanischer Energie,
**dadurch gekennzeichnet,** dass die Polymerzusammensetzung 7 bis 13 Gew.%, PDLA, bezogen auf die Gesamtmenge der in der Polymerzusammensetzung enthaltenen Komponenten PDLA und PLLA, enthält und dass die Komponente c. ein statistischer Copolyester auf Basis von mindestens Adipin- und/oder Sebacinsäure ist.

13. Polymerzusammensetzung erhältlich nach einem Verfahren gemäß Anspruch 12.

14. Verfahren zur Herstellung von Formteilen, **gekennzeichnet durch**:
a. Einbringen einer Polymerzusammensetzung gemäß einem der Ansprüche 1 bis 11 oder 13 in eine Form;
b. Formen des Formteils; und
c. Entfernen des Formteils aus der Form.

15. Verfahren gemäß Anspruch 14, **dadurch gekennzeichnet, dass** die Form, in welche die Polymerzusammensetzung in Schritt a. eingebracht wird, auf 30 bis 130°C, 30 bis 100°C, oder auf 45 bis 85°C erhitzt und während des Verfahrens im Wesentlichen auf dieser Temperatur gehalten wird.

16. Verfahren gemäß einem der Ansprüche 14 oder 15, **dadurch gekennzeichnet, dass** ein Zyklus, der die Schritte a. bis c. des Verfahrens enthält, innerhalb einer Zykluszeit von maximal 60 Sekunden, insbesondere maximal 45 oder 30 Sekunden, durchgeführt wird.

17. Verwendung einer Polymerzusammensetzung gemäß einem der Ansprüche 1 bis 11 oder 13 zur Herstellung von Formteilen, Folien oder Fasern.

18. Formteile, Folien oder Fasern enthaltend eine Polymerzusammensetzung gemäß einem der Ansprüche 1 bis 11 oder 13.

19. Formteil gemäß Anspruch 18, **dadurch gekennzeichnet, dass** das Formteil gemäß DIN EN ISO 75, Methode B, bis 55°C, insbesondere bis 80°C oder 85°C oder 90°C oder 95°C wärmeformbeständig ist und/oder gemäß EN 13432 vollständig biologisch abbaubar ist und/oder gemäß ASTM 6866 mindestens 50% biobasierten Kohlenstoff enthält.

20. Formteil gemäß Anspruch 18 oder 19, **dadurch gekennzeichnet, dass** das Formteil (1) einen frustokonischen Körper (2) mit einem Rand (3), einer Seitenwand (4) einer Einlasswand (5), wobei die Einlasswand (5) einen flachen oder konvexen Teil (6) umfasst, einer tiefer gelegenen Zuführungswand (7), die den Rand (3) versiegelt, umfasst, wobei die flache oder konvexe Portion (6) eine zurückgezogene oder reliefartige Struktur (8) aufweist, wobei diese zurückgezogene oder reliefartige Struktur (8) das Durchstoßen dieser Struktur mit Klingen, die zum Injektionsgerät gehören, erleichtert und sich auf einem im Wesentlichen kreisförmigen Pfad (9) befindet, dessen Durchmesser durch den Durchmesser der ebenfalls kreisförmig angeordneten Klingen definiert ist.

21. Formteil gemäß Anspruch 20, **dadurch gekennzeichnet, dass** die tiefer gelegene Zuführungswand (7) den Rand (3) im Wesentlichen gasdicht versiegelt.

22. Formteil gemäß Anspruch 20 oder 21, **dadurch gekennzeichnet, dass** die tiefer gelegene Zuführungswand (7) gemäß EN 13432 biologisch abbaubar, insbesondere vollständig biologisch abbaubar ist.

## Claims

1. Polymer composition containing, based on the total weight of the polymer composition, the following components:
a. 15 to 70 wt.% PLLA,
b. 0.1 to 15 wt.% PDLA,
c. 5 to 40 wt.% polyester,
d. 5 to 40 wt.% organic or inorganic filler,
**characterized in that** the polymer composition contains 7 to 13 wt.% PDLA, based on the total amount of the components PDLA and PLLA contained in the polymer composition, and **in that** the component c. is a random copolyester based on at least adipic acid and/or sebacic acid.

2. Polymer composition according to claim 1, **characterized in that** the polymer composition contains 25 to 65 wt.%, 35 to 60 wt.% or 45 to 60 wt.% of the component a., in each case based on the total weight of the polymer composition.

3. Polymer composition according to either claim 1 or claim 2, **characterized in that** the polymer composition contains 5 to 35 wt.%, 10 to 30 wt.% or 15 to 25 wt.% of the component c., in each case based on the total weight of the polymer composition.

4. Polymer composition according to any of the preceding claims, **characterized in that** the polymer composition contains 5 to 35 wt.% or 15 to 25 wt.% of the component d., in each case based on the total weight of the polymer composition.

5. Polymer composition according to any of the preceding claims, **characterized in that** the component c. is a random aliphatic-aromatic copolyester based on 1,4-butanediol, adipic acid and/or sebacic acid and terephthalic acid or terephthalic acid derivative, in particular dimethyl terephthalate DMT.

6. Polymer composition according to any of the preceding claims, **characterized in that** the component d. is selected from the group consisting of chalk, lime, talc, calcium carbonate, aluminum oxide, magnesium oxide, silicates, kaolin, dolomite, boron nitride, terbium oxide, starch, modified starch, thermoplastic starch, cellulose, cyclodextrins, saccharin, thymine, uracil, orotic acid, cyanuric acid, polyvinyl alcohol, polyhydroxyalkanoates, polyhydroxybutyrate, polybutylene succinate, polybutylene terephthalate, Ecoflex and mixtures thereof.

7. Polymer composition according to any of the preceding claims, **characterized in that** the polymer composition contains at least 40%, 50%, or 60% bio-based carbon, in accordance with ASTM 6866.

8. Polymer composition according to any of the preceding claims, **characterized in that** the polymer composition is biodegradable, in particular completely biodegradable, in accordance with EN 13432.

9. Polymer composition according to any of the preceding claims, **characterized in that,** in a DSC diagram of the polymer composition, which was measured in a heating- cooling-heating cycle starting at 15°C and having the target temperatures 220°C-15°C-260°C and having heating and cooling rates of 10°C/min in each case and equilibration times of 5 min at each target temperature, an exothermic peak occurs in the cooling phase in a temperature range of from 80°C to 120°C, in particular from 90°C to 110°C.

10. Polymer composition according to any of the preceding claims, **characterized in that,** in a DSC diagram of the polymer composition, which was measured in a heating- cooling-heating cycle starting at 15°C and having the target temperatures 220°C-15°C-260°C and having heating and cooling rates of 10°C/min in each case and equilibration times of 5 min at each target temperature, an endothermic peak occurs in the second heating phase at temperatures above 200°C, in particular above 210°C or 215°C.

11. Polymer composition according to claim 10, **characterized in that** a further endothermic peak occurs in the heating phases at temperatures of from 140°C to 190°C.

12. Method for the production of a polymer composition according to any of claims 1 to 11, **characterized by**:
a. producing a mixture containing, based on the total weight of the mixture, at least the following components:
i. 15 to 70 wt.% PLLA,
ii. 0.1 to 15 wt.% PDLA,
iii. 5 to 40 wt.% polyester,
iv. 5 to 40 wt.% organic or inorganic filler;
b. homogenizing the mixture by supplying thermal and/or mechanical energy,
**characterized in that** the polymer composition contains 7 to 13 wt.% PDLA, based on the total amount of the components PDLA and PLLA contained in the polymer composition, and **in that** the component c. is a random copolyester based on at least adipic and/or sebacic acid.

13. Polymer composition obtainable by a method according to claim 12.

14. Method for the production of molded parts, **characterized by**:
a. introducing a polymer composition according to any of claims 1 to 11 or 13 into a mold;
b. molding the molded part; and
c. removing the molded part from the mold.

15. Method according to claim 14, **characterized in that** the mold into which the polymer composition is introduced in step a. is heated to 30 to 130°C, 30 to 100°C, or 45 to 85°C and is kept substantially at this temperature during the process.

16. Method according to either claim 14 or claim 15, **characterized in that** a cycle comprising steps a. to c. of the method is carried out within a cycle time of at most 60 seconds, in particular of at most 45 or 30 seconds.

17. Use of a polymer composition according to any of claims 1 to 11 or 13 for the production of molded parts, films or fibers.

18. Molded parts, films or fibers containing a polymer composition according to any of claims 1 to 11 or 13.

19. Molded part according to claim 18, **characterized in that** the molded part is heat resistant up to 55°C, in particular up to 80°C, 85°C, 90°C or 95°C, in accordance with DIN EN ISO 75, method B, and/or is fully biodegradable, in accordance with EN 13432, and/or contains at least 50% bio-based carbon, in accordance with ASTM 6866.

20. Molded part according to claim 18 or claim 19, **characterized in that** the molded part (1) comprises a frustoconical body (2) that has a rim (3), a side wall (4), an inlet wall (5), wherein the inlet wall (5) comprises a flat or convex part (6), and a feed wall (7) which is located at a lower position and seals the rim (3), wherein the flat or convex portion (6) has a retracted or relief-like structure (8), wherein said retracted or relief-like structure (8) facilitates the piercing of said structure by blades which belong to the injection device and is located on a substantially circular path (9), the diameter of which path is defined by the diameter of the blades, which are likewise arranged in a circle.

21. Molded part according to claim 20, **characterized in that** the feed wall (7) which is located at a lower position seals the rim (3) in a substantially gas-tight manner.

22. Molded part according to claim 20 or claim 21, **characterized in that** the feed wall (7) which is located at a lower position is biodegradable, in particular completely biodegradable, in accordance with EN 13432.

## Revendications

1. Composition polymère contenant, par rapport au poids total de la composition polymère, les constituants suivants :
a. 15 à 70 % en poids de PLLA,
b. 0,1 à 15 % en poids de PDLA,
c. 5 à 40 % en poids de polyester,
d. 5 à 40 % en poids d'une charge organique ou inorganique, **caractérisée en ce que** la composition polymère contient 7 à 13 % en poids de PDLA par rapport à la quantité totale des constituants PDLA et PLLA contenus dans la composition polymère, et **en ce que** le constituant c. est un copolyester aléatoire à base d'acide adipique et/ou sébacique au moins.

2. Composition polymère selon la revendication 1, **caractérisée en ce que** la composition polymère contient 25 à 65 % en poids, 35 à 60 % en poids ou 45 à 60 % en poids du constituant a., dans chaque cas par rapport au poids total de la composition polymère.

3. Composition polymère selon l'une des revendications 1 ou 2, **caractérisée en ce que** la composition polymère contient 5 à 35 % en poids, 10 à 30 % en poids ou 15 à 25 % en poids du constituant c., dans chaque cas par rapport au poids total de la composition polymère.

4. Composition polymère selon l'une des revendications précédentes, **caractérisée en ce que** la composition polymère contient 5 à 35 % en poids ou 15 à 25 % en poids du constituant d., dans chaque cas par rapport au poids total de la composition polymère.

5. Composition polymère selon l'une des revendications précédentes, **caractérisée en ce que** le constituant c. est un copolyester aliphatique-aromatique aléatoire à base de 1,4-butanediol, d'acide adipique et/ou d'acide sébacique et d'acide téréphtalique ou d'un dérivé d'acide téréphtalique, en particulier de téréphtalate de diméthyle DMT.

6. Composition polymère selon l'une des revendications précédentes, **caractérisée en ce que** le constituant d. est choisi dans le groupe constitué de craie, chaux, talc, carbonate de calcium, oxyde d'aluminium, oxyde de magnésium, silicates, kaolin, dolomite, nitrure de bore, oxyde de terbium, amidon, amidon modifié, amidon thermoplastique, cellulose, cyclodextrines, saccharine, thymine, uracile, acide orotique, acide cyanurique, alcool polyvinylique, polyhydroxyalcanoates, polyhydroxybutyrate, polybutylène succinate, polybutylène téréphtalate, Ecoflex et leurs mélanges.

7. Composition polymère selon l'une des revendications précédentes, **caractérisée en ce que** la composition polymère contient conformément à ASTM 6866 au moins 40 %, 50 % ou 60 % de carbone d'origine biologique.

8. Composition polymère selon l'une des revendications précédentes, **caractérisée en ce que** la composition polymère est biodégradable conformément à EN 13432, en particulier complètement biodégradable.

9. Composition polymère selon l'une des revendications précédentes, **caractérisée en ce que** dans un diagramme DSC de la composition polymère, qui a été mesuré dans un cycle chauffage-refroidissement-chauffage commençant à 15 °C avec les températures cibles 220 °C-15 °C-260 °C avec des vitesses de chauffage et de refroidissement de 10 °C/min respectivement et des temps d'équilibrage aux températures cibles de 5 min respectivement, un pic exothermique se produit pendant la phase de refroidissement dans une plage de température de 80 °C à 120 °C, en particulier de 90 °C à 110 °C.

10. Composition polymère selon l'une des revendications précédentes, **caractérisée en ce que** dans un diagramme DSC de la composition polymère, qui a été mesuré dans un cycle chauffage-refroidissement-chauffage commençant à 15 °C avec les températures cibles 220 °C-15 °C-260 °C avec des vitesses de chauffage et de refroidissement de 10 °C/min respectivement et des temps d'équilibrage aux températures cibles de 5 min respectivement, un pic endothermique se produit pendant la seconde phase de chauffage à des températures supérieures à 200 °C, en particulier supérieures à 210 °C ou à 215 °C.

11. Composition polymère selon la revendication 10, **caractérisée en ce qu'**un autre pic endothermique se produit à des températures de 140 °C à 190 °C pendant les phases de chauffage.

12. Procédé de préparation d'une composition polymère selon l'une des revendications 1 à 11, **caractérisé par** :
a. la préparation d'un mélange contenant, par rapport au poids total du mélange, au moins les constituants suivants :
i. 15 à 70 % en poids de PLLA,
ii. 0,1 à 15 % en poids de PDLA,
iii. 5 à 40 % en poids de polyester,
iv. 5 à 40 % en poids d'une charge organique ou inorganique.
b. l'homogénéisation du mélange tout en apportant de l'énergie thermique et/ou mécanique,
**caractérisé en ce que** la composition polymère contient 7 à 13 % en poids de PDLA par rapport à la quantité totale des constituants PDLA et PLLA contenus dans la composition polymère, et **en ce que** le constituant c. est un copolyester aléatoire à base d'acide adipique et/ou sébacique au moins.

13. Composition polymère pouvant être obtenue par un procédé selon la revendication 12.

14. Procédé de préparation de pièces moulées, **caractérisé par** :
a. l'introduction d'une composition polymère selon l'une des revendications 1 à 11 ou 13 dans un moule;
b. le moulage de la pièce moulée ; et
c. le retrait de la pièce moulée du moule.

15. Procédé selon la revendication 14, **caractérisé en ce que** le moule dans lequel la composition polymère est introduite à l'étape a., est chauffé à 30 à 130 °C, à 30 à 100 °C ou à 45 à 85 °C et est maintenu sensiblement à cette température pendant le procédé.

16. Procédé selon l'une des revendications 14 ou 15, **caractérisé en ce qu'**un cycle qui contient les étapes a. à c. du procédé, est réalisé dans un temps de cycle de 60 secondes maximum, en particulier de 45 ou de 30 secondes maximum.

17. Utilisation d'une composition polymère selon l'une des revendications 1 à 11 ou 13 pour la préparation de pièces moulées, de films ou de fibres.

18. Pièces moulées, films ou fibres contenant une composition polymère selon l'une des revendications 1 à 11 ou 13.

19. Pièce moulée selon la revendication 18, **caractérisée en ce que** la pièce moulée a une excellente stabilité dimensionnelle à chaud jusqu'à 55 °C, en particulier jusqu'à 80 °C ou 85 °C ou 90 °C ou 95 °C conformément à DIN EN ISO 75, méthode B, et/ou est complètement biodégradable conformément à EN 13432 et/ou contient au moins 50 % de carbone d'origine biologique conformément à ASTM 6866.

20. Pièce moulée selon la revendication 18 ou 19, **caractérisée en ce que** la pièce moulée (1) comprend un corps tronconique (2) comportant un bord (3), une paroi latérale (4) une paroi d'entrée (5), la paroi d'entrée (5) comprenant une partie plate ou convexe (6), une paroi d'alimentation inférieure (7) qui scelle le bord (3), la partie plate ou convexe (6) ayant une structure rétractée ou en relief (8), cette structure rétractée ou en relief (8) facilitant le perçage de cette structure avec des lames appartenant au dispositif d'injection et étant située sur une trajectoire sensiblement circulaire (9) dont le diamètre est défini par le diamètre des lames, également disposées de manière circulaire.

21. Pièce moulée selon la revendication 20, **caractérisée en ce que** la paroi d'alimentation inférieure (7) scelle le bord (3) de manière sensiblement étanche aux gaz.

22. Pièce moulée selon la revendication 20 ou 21, **caractérisée en ce que** la paroi d'alimentation inférieure (7) est biodégradable conformément à EN 13432, en particulier complètement biodégradable.
